**Europäisches Patentamt**

**European Patent Office**

**Office européen des brevets**

(11) Veröffentlichungsnummer: **0 036 851**
**A1**

(19)

# (12) EUROPÄISCHE PATENTANMELDUNG

(21) Anmeldenummer: 81890019.3

(22) Anmeldetag: 30.01.81

(51) Int. Cl.³: **B 65 G 47/50**, B 21 B 39/00

(30) Priorität: 20.03.80 AT 1521/80

(43) Veröffentlichungstag der Anmeldung: 30.09.81
Patentblatt 81/39

(84) Benannte Vertragsstaaten: BE CH DE FR GB IT LI LU NL SE

(71) Anmelder: VOEST-ALPINE Aktiengesellschaft,
Friedrichstrasse 4, A-1011 Wien (AT)

(72) Erfinder: Brandl, Harald Dipl. Ing, im Tal 49,
A-8704 Donawitz (AT)
Erfinder: Dolc, Reinhard, Pestalozzistrasse 102,
A-8704 Donawitz (AT)
Erfinder: Kammerhofer, Klaus Dipl. Ing.Dr, Stollenweg 3,
A-8706 Leoben (AT)
Erfinder: Reiter, Karl Dipl.Ing., Mayr-Meinhofstrasse 29,
A-8700 Leoben (AT)
Erfinder: Sainitzer, Dietmar Dipl. Ing.,
Roseggerstrasse 25, A-8706 Leoben (AT)
Erfinder: Moshammer, Karl, Lokalbahnweg 8,
A-4060 Leonding (AT)

(74) Vertreter: Kretschmer, Adolf, Dipl-Ing.,
Schottengasse 3a, A-1014 Wien (AT)

(54) Verfahren zum Leiten, Verteilen und/oder Zusammenführen von Teilen eines Materialflusses, und Vorrichtung zur Durchführung dieses Verfahrens.

(57) Bei einem Verfahren zum Leiten, Verteilen und/oder Zusammenführen von Teilen eines Materialflusses in einer Anlage wird der von diesen durchlaufene Weg durch Sensorelemente überwacht und mittels eines Rechners verfolgt. Die Teile des Materialflusses werden über wenigstens zwei Verzweigungen, in denen in Abhängigkeit von der Position eines ausgewählten Teiles des Materialflusses jeweils zwei von wenigstens drei Wegen verbunden werden, und zwischen Verzweigungen sequentiell geführt. Für das Auswählen der Teile wird beim Aufgeben jedem Teil ein seine Herkunft, Bestimmung oder dgl. definierendes Kennzeichen zugeordnet, welches in einer die Verbindung zweier Wege in den Verzweigungen steuernden Steuereinrichtung synchron mit dem betreffenden Teil mitgeführt wird.

Eine Vorrichtung zum Durchführen dieses Verfahrens enthält einen Rechner und eine Transporteinrichtung, die zwischen verschiedenen Verarbeitungs- oder Bearbeitungsstufen über Weichen (4, 6, 9) geführt ist, wobei die Weichen über Steuerleitungen mit dem Rechner verbunden sind.

EP 0 036 851 A1

Verfahren zum Leiten, Verteilen und/oder Zusammenführen
von Teilen eines Materialflusses, und Vorrichtung zur
Durchführung dieses Verfahrens

Die Erfindung bezieht sich auf ein Verfahren zum Leiten,
Verteilen und/oder Zusammenführen von Teilen eines Materialflusses in einer Materialbearbeitungs- und/oder -verarbeitungsanlage, insbesondere in einer Walzstraße oder einer
Stranggießanlage, bei welchem der von den Teilen durchlaufene Weg durch Sensorelemente überwacht und insbesondere
mittels eines Rechners verfolgt wird, sowie auf eine Vorrichtung zur Durchführung dieses Verfahrens.

Im betrieblichen Ablauf ist man bestrebt, jederzeit einen
Überblick über die jeweilige Lage der einzelnen Komponenten
zu haben. Es ist bekannt, diese Informationen an Meßstellen
durch Sensoren an der Erzeugungsstraße erfassen zu lassen.
Die gesamte Erzeugungsstraße·kann je nach Anordnung solcher
Meßstellen bzw. Bereiche auch in einem Rechner abgebildet
werden, in dem jeder Meßstelle bzw. Bereich ein Datenplatz
zugeordnet ist. Es kann damit angezeigt werden, ob sich innerhalb dieses Bereiches eine Komponente befindet oder nicht.
Damit gewinnt man Informationen über die Auslastung und
Störungen einer Erzeugungsstraße.

Es ist auch bekannt, den einzelnen Komponenten fortlaufende
Nummern zuzuweisen und diese synchron mitlaufen zu lassen.
Soferne diese Reihenfolge nicht gestört wird, sind am Ende
Kommissionierungen ohne Schwierigkeiten vorzunehmen.

Für den Fall aber, daß diese Reihenfolge unterbrochen ist, kann auf diese Weise eine einwandfreie Kommissionierung nur durch beträchtlichen zusätzlichen Aufwand erfolgen.

Gründe für Kommissionsteilungen bzw. -vermischungen können beispielsweise Ansteckversager, mehradrige Walzung sowie Stillstand von alternativen Teilsträngen bzw. Aggregaten sein.

Man hat daher versucht, die bei der Aufgabe noch geschlossene Kommission im Zuge der Produktion zusammenzuhalten, um sich die neuerliche Sortierung bzw. Zusammenstellung am Ende der Produktion zu ersparen.

Im Falle, wo einadrig gewalzt wird und somit keine alternativen Produktionsmöglichkeiten vorhanden sind, stellt sich dieses Problem nicht, da dann alle Komponenten hintereinander produziert und transportiert werden und damit die Reihenfolge der Kommission nicht gestört wird. Bei mehradriger Walzung, wo, wie vorhin angeführt, Kommissionen geteilt bzw. vermischt werden können, ist es bekannt, jedem Knüppel eine laufende Nummer zuzuweisen und synchron zur Produktionsbewegung mitzunehmen. Der gesamte Produktionsweg ist dabei organisatorisch in Abschnitte unterteilt und mit Sensoren ausgestattet, die das Passieren des Walzgutes registrieren, womit gleichzeitig die vergebene (-laufende-) Nummer in den diesem Abschnitt zugewiesenen Datenplatz im Rechner transferiert wird. Bei der Übergabe des Drahtbundes an eine Transporteinrichtung, beispielsweise eine Hakenbahn, wird die zugewiesene Nummer der gelesenen Haken-Nr. angeschlossen. Eine neuerliche Ablesung der Haken-Nr. im Lager ermöglicht es dann, mit Hilfe einer Liste, aus der hervorgeht, welchem Knüppel (welcher Kommission) welche Nummer zugewiesen wurde, kommissionieren zu können. Damit kann auf eine Markierung des Walzgutes selbst verzichtet werden. Eine solche Markierung erfolgte beispielsweise bisher bei der

Übergabe des Drahtbundes von der Walzstraße an die Hakenbahn, wobei beispielsweise Etiketten oder Farbmarkierungen
verwendet wurden.

Die Verfolgung der laufenden Nummer durch wenigstens zweimalige Ablesung der Haken-Nr. ist jedoch sehr fehleranfällig,
denn die jeweils letzte Ablesung kann ein anderes Ergebnis
bringen als die vorangegangene.

Bei einer bekannten Einrichtung dieser Art trägt jeder
Haken eine fest zugeordnete, maschinell lesbare Haken-Nummer,
die im Dual-Code dargestellt ist. Die dabei auf einer Tafel
angeordneten Schlitze, die mit Laserstrahl abgetastet werden,
sind häufig stark verschmutzt, wodurch sich Fehler ergeben
können. Es kann z.B. eine Haken-Nummer gelesen werden, die
gar nicht möglich ist, was einen unmittelbaren händischen
Eingriff erforderlich macht, wobei sich zwangsläufig ein
Stop dieses Stranges ergibt. Es kann auch eine Haken-Nummer
gelesen werden, die zwar möglich ist, aber nicht der tatsächlichen bzw. jener, die eingangs gelesen wurde, entspricht. Es erfolgt somit kein händischer Eingriff zur Korrektur, sondern es wird praktisch dieser Fehler mitgeschleppt.
Der Drahtbund dieses Hakens geht bei der Kommissionszusammenstellung als falsche Komponente mit zur Auslieferung oder
wird einer Folgebearbeitung unterworfen, die nicht vorgesehen ist. Wenn Verzweigungen möglich sind, ist ein zusätzlicher Arbeitsaufwand nötig, da es nötig ist, die einzelnen
Komponenten in einer Weise zu markieren, daß die Markierung
von einer Bedienungsperson an der Weiche abgelesen werden
kann, was wiederum Zeit braucht.

Sind mehrere Kriterien bei einer Weiche zu alternativen
Aggregaten wie z.B. verschiedenen Bearbeitungsstufen für das
Material zu berücksichtigen, beispielsweise das Zusammenführen bestimmter Teile des Materialflusses unter Vermeidung
von Stauungen, so ist dies mit der bisher angewandten Arbeitsweise kaum mehr durchzuführen. Darüberhinaus ist die Mitnahme des für solche Zwecke größeren Datenumfanges der einzelnen Komponenten auch nicht mehr in Form einer am betreffenden Teil angebrachten, lesbaren Markierung zweckmäßig, denn ein solches Lesen würde wiederum zuviel Zeit beanspruchen.

Die Verwendung von Weichen erfolgte bisher lediglich mit dem Zweck, die Haken der einlaufenden Stränge auf einen einzigen Strang zusammenzufassen, um Platz zu sparen, nicht um zu kommissionieren. Es durfte hiebei bei mehreren Einlaufsträngen jener Haken, der jeweils als erster die letzte Stelle vor der Weiche erreichte, passieren. Mit der Haken-Nummer ist eine laufende Nummer verknüpft, allerdings mit der oben genannten Verwechslungs- bzw. Fehleranfälligkeit bei der Registrierung. Es ist bisher nicht bekannt geworden, daß eine Kommissionszusammenführung vor dem Lager durchgeführt wird.

Die Erfindung soll diese Nachteile vermeiden und darüberhinaus die Möglichkeit schaffen, unabhängig von der Reihenfolge und der Richtung des Eintreffens der einzelnen Teile des Materialflusses eine einwandfreie Kommissionszusammenführung vor dem Lager vorzunehmen. Störungen frühzeitig zu erfassen und damit die Durchsatzleistung der Anlage zu erhöhen.

Zur Lösung dieser Aufgabe ist die Erfindung im wesentlichen dadurch gekennzeichnet, daß die Teile des Materialflusses über wenigstens zwei Verzweigungen und zwischen Verzweigungen sequentiell geführt werden, daß in den Verzweigungen zwei von wenigstens drei Wegen wahlweise verbunden werden und daß die Verbindung zweier Wege in den Verzweigungen in Abhängigkeit von der Position eines ausgewählten Teiles des Materialflusses innerhalb des in diesem zurückzulegenden Weges hergestellt wird, wobei die Auswahl der Teile in der Weise erfolgt, daß jedem Teil bei der Aufgabe ein Kennzeichen zugewiesen wird, das auf seine Herkunft, Bestimmung od. dgl. hinweist, und daß dieses Kennzeichen synchron mit dem jeweiligen Teil in einer die Verbindung zweier Wege in den Verzweigungen steuernden Steuereinrichtung mitgeführt wird. Dadurch, daß die Teile des Materialflusses über Weichen geführt werden, läßt sich in einfacher Weise ein Verteilen und Zusammenführen der Teile erzielen. Wesentliche Aufgabe des erfindungsgemäßen Verfahrens ist aber nun die Zusammenführung von Teilen des Materialflusses zu ermöglichen, welche einer gemeinsamen Kundenbestellung bzw. Kommission entsprechen, um auf diese Weise die Manipulation vor der Auslieferung so gering wie nur möglich zu halten. Zu diesem Zweck erfolgt die Auswahl der Teile, welche durch Herstellung bestimmter Wege in den Verzweigungen zusammengeführt werden sollen dadurch, daß jeder Komponente bei der Aufgabe ein Kennzeichen zugewiesen wird, das auf Herkunft, Bestimmung u. dgl. hinweist, wobei dieses Kennzeichen synchron mit der einzelnen Komponente im Rechner mitgeführt wird. Weiters wird vorzugsweise die gesamte Anlage in Abschnitte unterteilt, in denen das Passieren der Komponente registriert wird und wird ein ständiger Vergleich der anlaufenden Komponenten mit der Kapazität alternativer Aggregate durchgeführt.

Analog der Bewegung der Teile des Materialflusses von einem Abschnitt zum anderen wird das Kennzeichen in einen dem Abschnitt entsprechenden Speicherplatz des Rechners verlagert. Somit sind alle Teile des Materialflusses bzw. Komponenten eindeutig abgebildet und es fällt die aufwendige lesbare Markierung der Komponente weg. Die Kommissionierung am Ende des Stranges ist verwechslungsfrei möglich, wobei es gleichgültig ist, ob die Komponenten einer Kommission auf einem Strang gelaufen sind bzw. ankommen oder auf mehreren. Durch den ständigen Vergleich von Soll und Ist einer Kommission kann nach Einlangen der letzten Komponente der Kommission, diese sofort abgefertigt werden. Das bedeutet, daß nicht händisch die Vollständigkeit der Kommission überprüft zu werden braucht, was Zeit kostet. Auch war es bisher erforderlich, aus Platzgründen aufgrund der Unkenntnis, zu welchem Zeitpunkt die restlichen Komponenten einlangen, die Kommission in Teilen und damit provisorisch abzufertigen.

Vorzugsweise wird ständig der Speicherinhalt, der die Anzahl der anlaufenden Komponenten beinhaltet, mit dem Speicherinhalt in dem Teilbereich der Anlage der die geringste Durchlaufkapazität des betriebenen Stranges beinhaltet, verglichen. Stellt sich heraus, daß die anlaufenden Komponenten die Durchlaufkapazität übersteigen, wird bei Vorhandensein eines alternativen Materialstranges die entsprechende Weiche umgelegt.

Ist die Durchlaufkapazität gleich oder größer, so kann dennoch in Abhängigkeit von der Zuverlässigkeit bzw. Störanfälligkeit des Aggregates, wenigstens mit Teilen auf einen alternativen Strang ausgewichen werden. Damit werden Stauungen am betroffenen Aggregat und allen vorgelagerten vermieden bzw. der Materialfluß vergleichmäßigt.

Vorzugsweise verfolgt bzw. überwacht ein Zähler die Abschnittsdurchlaufzeit der einzelnen Komponenten. Stimmt die Ist-Durchlaufzeit mit der Soll-Durchlaufzeit überein, so wird diese in die entsprechende Speicherstelle der Steuereinrichtung, welche dem entsprechenden Anlagenabschnitt entspricht, gestellt. Stimmt diese Zeit nicht überein, da beispielsweise das erwartete Signal aus der Meßstelle ausblieb, so läuft der Zähler weiter bis zur nächsten Meßstelle. Gibt es dort eine Übereinstimmung zwischen Soll- und Ist-Durchlaufzeit, so ist offenbar, daß keine Blockade vorliegt, die zuvor passierte Meßstelle selbst defekt ist, der Bewegungsverlauf der Komponente jedoch normal ist. Es ist damit nicht bei jedem Ausbleiben eines Signals nötig, die Anlage zu stoppen.

Die erfindungsgemäße Vorrichtung zur Durchführung des erfindungsgemäßen Verfahrens weist einen Rechner und eine Transportvorrichtung für die Teile des Materialflusses auf und ist im wesentlichen dadurch gekennzeichnet, daß die Transporteinrichtung zwischen verschiedenen Verarbeitungs- oder Bearbeitungsstufen über Weichen geführt ist, und daß die Weichen über Steuerleitungen mit dem Rechner verbunden sind. Derartige Weichen weisen in der Regel drei Anschlußstellen - entweder zwei Einlauf- und einen Auslaufstrang oder einen Einlauf- und zwei Auslaufstränge auf, und sind in der Richtung des Materialflusses hintereinander angeordnet. Die Weichen können durch Stapelstrecken oder Pufferstrecken verbunden werden, wobei die Weichen von Signalen gesteuert werden, die extern aufgenommen werden. Die Kennzeichnung der Transportmittel braucht nur bei der Übergabe abgelesen werden, und es ist unerheblich, ob diese Ablesung richtig oder falsch war.

Die erste Weiche weist bei einer zweiadrigen Walzstraße zweckmäßigerweise zwei Einlauf- und einen Auslaufstrang, der dann im folgenden zugleich Einlaufstrang der nächsten Weiche ist, auf, die dann wieder zwei Auslaufstränge aufweist. Die Weichen sind dabei auf ein Signal, das auf einem externen Datenplatz aufgenommen wird, zu verstellen, sodaß im Falle zweier Einlaufstränge und eines Auslaufstranges einer der beiden Einlaufstränge freigegeben oder verriegelt ist bzw. im Falle eines Einlaufstranges und zweier Auslaufstränge einer der beiden Auslaufstränge freigegeben wird.

Auf diese Weise können die Kommissionen auf den zwischen den Weichen angeordneten Stapelstrecken zusammengeführt und somit geschlossen dem nächsten gemeinsamen Arbeitsgang, beispielsweise einem Bearbeitungsgang oder der Auslieferung, zugeführt werden.

Um die Zusammenführung mehrerer Komponenten einer Kommission noch innerhalb der Bahn der Transporteinrichtung zu ermöglichen, muß die Möglichkeit für eine Teilung eines Sammelstranges gegeben sein, um eine Sortierung durchführen zu können.

Die Transporteinrichtung kann in einfacher Weise von einer Hakenbahn gebildet sein. Bei derartigen Hakenbahnen ist es bekannt, die Haken-Nummer, an die die laufende Nummer des Drahtbundes geknüpft ist, zu lesen, z.B. bei der Aufnahme des Drahtbundes auf den Haken, vor Weichen und im Lagerbereich. Für die jeweils zu fällende (Steuer)-Entscheidung war die jeweils letzte Lesung maßgeblich, was zu den oben genannten Fehlern führte.

Erfindungsgemäß wird nur ein einziges Mal gelesen. Wird fehlerhaft gelesen, so wird der Drahtbund mit diesem Haken bzw. unter dieser Haken-Nummer geführt, was keine Nachteile bringt. Entscheidungen, beispielsweise vor Weichen, werden ausschließlich nach den Kennzeichen jener Drahtbunde in den Speicherregistern gefällt, die in der Reihenfolge, die ja bekannt ist, an den weichennächsten Stellen stehen. Das Kennzeichen selbst besteht unter anderem aus Hinweisen auf Herkunft, Bestimmung (Kommission), laufende Komponente einer Kommission etc.. Eigene Ableseeinrichtungen vor Weichen sind nun nicht mehr zwingend nötig. Die Anzahl der Weichen, die hintereinander angeordnet sind, richtet sich nach Anzahl der Walzadern, der Anzahl der Pufferplätze im Ofen, der Anzahl der Pufferplätze auf den die Weichen verbindenden Strängen.

In vorteilhafter Weise kann der Antrieb der Transporteinrichtungen zumindest über Teilbereiche ihrer Bahn reversierbar sein, wodurch sich bei entsprechender Steuerung des Antriebes durch den Rechner die Geschwindigkeit mit der die Zusammenführung nach den gewünschten Kriterien vorgenommen werden kann, erhöht.

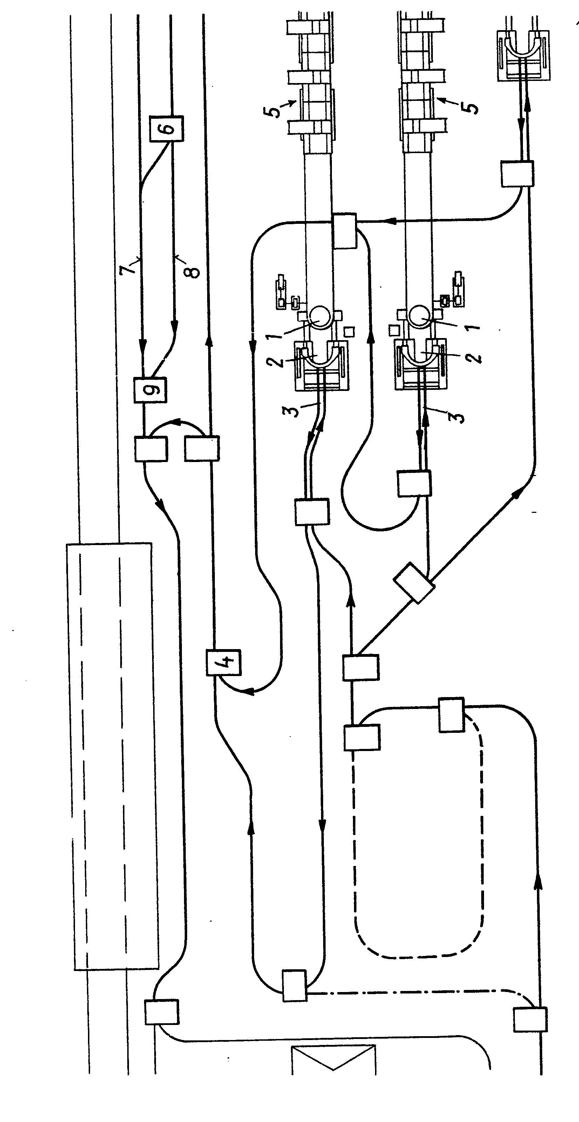

Die Erfindung wird nachfolgend an Hand eines in der Zeichnung schematisch dargestellten Ausführungsbeispieles näher erläutert.

0036851

Ein in der Zeichnung nicht dargestellter Hubbalkenofen besitzt einen Pufferplatz für einen Knüppel, welcher sich in Ausstoßrichtung gesehen an vorderster Stelle befindet. Der Pufferplatz ist notwendig, wenn das Anstechen eines Knüppels nicht gelingt. Dabei kühlt sich dieser durch das versprühte Kühlmedium für die Walzenkühlung so weit ab, daß seine Temperatur unter die Walztemperatur fällt und er neuerdings im Hubbalkenofen auf Walztemperatur erwärmt werden muß. Das geschieht dann auf dem genannten Pufferplatz. Das Ausstoßen erfolgt für die folgenden Knüppel dann je nachdem wie lange der Pufferplatz belegt ist, von der vorletzten Stelle. Der zurückgehaltene Knüppel wird nach Erreichen seiner Walztemperatur wieder ausgestoßen. Dies erfolgt dann, wenn dieselbe Einheit noch läuft, als deren letzter Knüppel, oder, wenn eine folgende Einheit läuft, am Ende derselben, damit diese Einheit geschlossen bleibt.

Diese Anstichversager kommen in der Regel pro Schicht ein- bis zweimal vor und können maximal bis zu einer halben Stunde auf dem Pufferplatz zum Wiederaufwärmen liegen. In dieser Zeit können maximal drei Folgeeinheiten anlaufen bzw. ausgestoßen werden. Gibt es zu einem Zeitpunkt, wo der Pufferplatz belegt ist, einen neuerlichen Anstichversager, so wird mittels einer dem Anstichgerüst vorgelagerten Pendelschere durch Handsteuereingriff eines Mannes, der Knüppel bis zu jener Stelle geschopft, an der er noch die richtige Walztemperatur (Pyrometermessung) hat, und neuerlich angesteckt.

Vom Einlaufrollgang des Hubbalkenofens bis zum fertigen Bund wird knüppel- bzw. bundbezogen verfolgt, wobei jedem Stück ein eindeutiges Kennzeichen in Form einer Zahl zugeordnet wird, welche synchron über den Produktionsweg mitgeht.

Das fertiggewalzte Gut passiert die Bundbildekammer 1 und erreicht als fertiger Drahtbund den Kippstuhl 2. Von diesem erfolgt die Übergabe auf eine Hakenbahn 3 etwa alle 90 Sekunden, bestenfalls alle 60 Sekunden. Von den zwei Kippstühlen 2 wird das Material auf die Haken der zwei Hakenbahnen 3 aufgegeben, die zur ersten Weiche 4 führen. Die Übergabe erfolgt so, daß der Haken bzw. dessen Nummer gelesen wird und das Kennzeichen vom Datenplatz des Abschnittes Kippstuhl auf den Datenplatz des betreffenden Hakens gestellt wird, sodaß die Reihenfolge der Drahtbunde bekannt ist. Aus dieser Reihenfolge der Kennzeichen erfolgt auch die tatsächliche Steuerentscheidung an der Weiche und nicht wie bislang üblich nach neuerlicher Lesung der Haken-Nummer, was die bekannte Fehlerquelle darstellt. Da im Hubbalkenofen ein Pufferplatz für die Aufnahme eines Knüppels, der dann als Nachzügler kommt, vorhanden ist, ist die Situation an den Weichen und Stapelstrecken folgende:

Da die Knüppel nach dem Ausstoß aus dem Hubbalkenofen abwechselnd angestochen werden, befinden sich die Knüppel einer Kommission auf beiden Walzadern 5 und somit nach Passieren der Bundbildekammern 1 und der Kippstühle 2 auf den diesen beiden Walzadern entsprechenden beiden Strängen der Hakenbahn 3, die zur ersten Weiche 4 führen.

Jeder der beiden Stränge, die zur ersten Weiche 4 führen, nimmt maximal 10 Haken auf. Da in der Regel alle 90 Sekunden, bestenfalls alle 60 Sekunden, vom Kippstuhl 2 ein Drahtbund an die Hakenbahn 3 übergeben wird, jedoch alle 30 Sekunden ein Bund durch den Haken zum nächsten Hakenplatz gefördert wird, befinden sich in der Praxis nur etwa die Hälfte der maximal möglichen Haken auf den Strängen. Das bedeutet anderseits eine Puffermöglichkeit im entsprechenden Ausmaß. Die Bewegung der Haken, wovon jeder einen eigenen Antrieb hat, erfolgt so, daß diese so lange fahren, bis ein davorliegender Hakenplatz als besetzt registriert wird bzw. bis zum weichennächsten Hakenplatz, wo er auf die Freigabe warten muß.

Gibt es Vermischungen, beispielsweise wenn der erste Drahtbund der folgenden Kommission vor dem letzten Drahtbund der laufenden Kommission kommt, so erfolgt die Zusammenführung der Kommission im Sinne eines Sortiervorganges dadurch, daß die Kennzahlen der der Weiche am nächsten stehenden Haken bzw. Drahtbunde im Datenplatz auf Kommissionszugehörigkeit verglichen werden bzw. abgefragt wird, ob ein Bund zur laufenden Kommission gehört, wie die Auslastung der Stränge ist, ob die maximale Pufferbelegung gegeben ist und wie die Weiche gerade steht.

Ergibt die Abfrage, daß die Anzahl der Haken eines Stranges die maximale Pufferbelegung erreicht hat, so wird die Weiche für diesen Strang freigegeben, auch wenn es der Zusammenführung der Kommission nicht dient, um einen Walzstraßenstillstand zu vermeiden. Dies gilt, solange diese maximale Anzahl - es werden ja in 60 bzw. 90 Sekunden Abstand - vom Kippstuhl 2 Haken mit Drahtbunden nachgeführt, gegeben ist.

Ist diese Anzahl kleiner als die maximale Pufferbelegung, so wird die Weiche danach gesteuert, welcher weichennächste Haken einen Drahtbund der laufenden Kommission trägt. Diese Steuerentscheidung fällt nach der im Datenplatz stehenden Kennzahl und nicht nach der Haken-Nummer. Ist dies bei beiden der Fall, so wird noch abgefragt, ob der Belegungsunterschied wenigstens zwei ist, ist das der Fall, erhält der entsprechende Strang den Fahrbefehl.

Andernfalls verbleibt die Weiche auf der gegenwärtigen Stellung, um die Weichenbewegung zu minimieren und damit den Verschleiß zu vermindern. Reicht diese erste Weiche 4 zur Zusammenführung der Kommission nicht aus, wird dies auf der folgenden weitergeführt.

Der aus der Weiche 4 führende Strang faßt maximal ca. 30 Haken bzw. Drahtbunde. An der Weiche 6 besteht die Möglichkeit, die Kommissionszusammenführung auf den zwei Auslaufsträngen 7, 8 fortzuführen, von denen jeder maximal 30 Haken bzw. Drahtbunde faßt. Selbst wenn Nachzügler kommen, die bis zu einer halben Stunde später zum Kippstuhl 2 kommen bzw. an die Hakenbahn 3 übergeben werden, ist es nach der Weiche 6 möglich, diese ihrer Kommission zuzuführen. Während dieser halben Stunde sind etwa 40 bis 50 Drahtbunde an die Hakenbahn 3 übergeben worden.

War der Anstichversager der letzte seiner Kommission, so befindet sich diese Anzahl von Drahtbunden zwischen dem Hauptkontingent der entsprechenden Kommission und dem Nachzügler. War der Anstichversager nicht Letzter seiner Kommission, ist diese Anzahl geringer. Auf den beiden Stapelstrecken 7, 8 zwischen der Weiche 6 und 9, von denen jede 30 Haken und damit Drahtbunde faßt, erfolgt dann die Zusammenführung auf einem Strang so, daß auf diesen Nachzügler gewartet wird.

Im speziellen Fall einer Drahtstraße wird die Vorgabe für den Materialfluß durch die Walzfolge (Walzprogramm - in der Regel eines pro Schicht) gegeben, welche von der Arbeitsvorbereitung (Chargenschreiber) erstellt und in das entsprechende Terminal eingegeben wird und damit an den Bildschirmen der Steuerstellen am Materialflußstrang erscheint. Der tatsächliche Materialfluß wird auf diesen Bildschirmen, die wenigstens einen Datenplatz im Rechner bzw. Abschnitt der Strecke selbst verwalten, abgebildet.

Am Bildschirm befindet sich praktisch die Spitze der Warteschlangen, d.h. die eben laufenden Komponenten und die folgenden Komponenten mit folgenden Angaben:

Daten der folgenden Einheit innerhalb einer Schmelze, Daten der laufenden Einheit innerhalb einer Schmelze, Daten der Komponenten, die sich in dem von diesem Bildschirm verwalteten Abschnitt oder Abschnitten bewegen.

Eine Einheit ist jene Anzahl von Einzelkomponenten, die glei-

0036851

chen Bearbeitungsbedingungen innerhalb eines Auftrages (Kommission) einer Schmelze unterworfen sind.

Die Einheitsdaten umfassen neben Schmelzen-Nummer, Einheiten-Nummer, Erprobungsschlüsseln u.a. auch die Stückanzahl, deren Soll- und Istwert ständig verglichen wird und damit der volle Durchlauf einer Einheit sofort registriert werden kann.

Die Daten der einzelnen Komponente oder Komponenten umfassen nicht mehr die Schmelzen-Nummer, wohl aber die Einheiten-Nummer, mit Hilfe der die Verknüpfung zur laufenden Einheit gewährleistet ist. Weiters umfaßt diese noch die Walzprogramm-Nummer und eine laufende Nummer. Die gesamte Materialflußanlage ist in physische Abschnitte, die mit Sensoren und Zählern ausgestattet sind, unterteilt, denen im Rechner jeweils ein Datenplatz entspricht. Eine oder mehr solche Datenplätze sind einem Bildschirm an einem Steuerstand zugeordnet, von dem auch Eingriffe z.B. bei Pannen möglich sind.

Die Knüppel werden paketweise antransportiert, wobei jedes Paket ein Etikett mit den zum Material gehörigen Daten aufweist. Diese Daten werden im dortigen Steuerstand mit der Walzfolge verglichen, die Identität bestätigt und erforderlichenfalls per Terminal verändert.

Ab Knüppelübergabe in den Ofeneinlaufrollgang wird der einzelne Knüppel bis zum fertigen Bund verfolgt, indem jedem eine Stückkennzahl zugeordnet wird. Diese wird vom System erteilt und besteht aus:

Walzfolge-Nummer: Walzprogramm; in der Regel eines pro Schicht;

Einheiten-Nummer: Auftrag oder Teile davon mit gleichen Bearbeitungsbedingungen innerhalb einer Schmelze;

Laufender-Nummer: Stücknummer der Einheit.

Der Knüppel selbst wird nicht gekennzeichnet.

Die Knüppelübergabe ist die erste Meßstelle der stückbezogenen Materialverfolgung mittels der rechnerinternen Abbildung. Bei Einheitenwechsel wird hier der Soll-Ist-Vergleich der Stückanzahl vorgenommen. Bei Abweichungen wird vom Rechner ein Signal gegeben, demzufolge das weitere automatische Übergeben von Knüppeln in den Ofeneinlaufrollgang verhindert und dem Steuerstand Gelegenheit zu Korrekturen per Terminal und/oder Kranmanipulation gibt.

Die Wärmestrahlungssensoren der Strecke registrieren die laufenden Knüppel abschnittweise und melden dies dem Rechner. Damit geht synchron mit dem Knüppel von Abschnitt zu Abschnitt die Kennzahl von Datenplatz zu Datenplatz mit. Die einheitenbezogen aufgegebenen Knüppel werden nun durch das alternierende Anstechen am Walzgerüst bei zweiadriger Walzung vermischt. Ebenso durch Störungen, wie Ausfall eines Bearbeitungsstranges u. dgl.

Die Zusammenführung der Einheiten, die zufolge der Einheitentrennung durch die zweiadrige Walzung und durch Störungen notwendig ist, erfolgt an den rechnergesteuerten Weichen 4, 6, 9 sowie am Ende der Hakenbahn, wenn der Bund abgenommen wird.

Die letzte Möglichkeit der einheitenbezogenen Zusammenführung bietet sich bei der Abnahme der Bunde von den Haken. Nach dem Preßvorgang z.B. in einer Einzelringpresse und einer Großbundpresse, wo zwei bis fünf Ringe zu einem Bund gepreßt werden, erhält an der Waage jeder Bund eine Etikette, wo nun körperlich alle Daten ausgewiesen sind. Damit ist bei der Abnahme von der Hakenbahn ein allenfalls noch ankommender Nachzügler zuzuordnen.

Gleichzeitig mit der vorhin genannten Verfolgung des Knüppels läuft ein Impulsgeber, dessen Impulse vom Rechner mitgezählt werden. Damit wird ein Vergleich der Sollzeit des Durchlaufes

0036851

durch einen Abschnitt, die im entsprechenden Datenplatz steht, mit der Istzeit möglich. Bei Nichtübereinstimmung wird nun nicht wie bisher sofort eingegriffen, sondern es wird dieser Vergleich an der folgenden Meßstelle abgewartet. Im Falle einer Übereinstimmung ist dann offenbar, daß keine Störung wie Blockade u. dgl. vorliegt, sondern daß beispielsweise nur die Sensoren der betreffenden Meßstelle schadhaft waren. Bei Nichtübereinstimmung zwischen Soll- und Istwert muß jedoch eingegriffen werden.

Eine durch die Verwendung eines Rechners mögliche Kapazitätsüberwachung hat den Zweck, Stauungen bzw. Wartezeiten zu verhindern. Wenn beispielsweise eine laufende Einheit von ihren restlichen Komponenten durch andere getrennt ist, werden in dem Bestreben, die laufende Einheit zu komplettieren, dazwischenliegende einheitsfremde Komponenten zurückgehalten. Bei gleicher Taktzeit kann dies jedoch nur unter Beachtung der Kapazität des betreffenden Stapelstranges erfolgen. Dies erfolgt ganz allgemein durch den ständigen Vergleich der Kapazität des oder der betreffenden Aggregate mit den anlaufenden Komponenten. Übersteigen diese die Kapazität eines Stapelstranges, so erfolgt, auch wenn es der einheitenbezogenen Zusammenführung nicht dient, zufolge der Priorität "Taktzeit" beispielsweise, das Umlegen der Weiche auf die alternative Stapelstrecke, um die Taktzeit gleichzuhalten bzw. keine Stauungen und Wartezeiten zu schaffen. Die einheitenbezogene Zusammenführung muß dann eben auf einer folgenden Weiche ablaufen. Dieser Gedanke kann überall dort angewendet werden, wo alternative Aggregate vorhanden sind, deren Weichen dementsprechend zu betätigen sind. Das Ergebnis ist eine höhere Durchsatzleistung bei gleichbleibender Kapazität.

Patentansprüche:

1. Verfahren zum Leiten, Verteilen und/oder Zusammenführen von Teilen eines Materialflusses in einer Materialbearbeitungs- und/oder -verarbeitungsanlage, insbesondere in einer Walzstraße oder einer Stranggießanlage, bei welchem der von den Teilen durchlaufene Weg durch Sonsorelemente überwacht und insbesondere mittels eines Rechners verfolgt wird,
dadurch gekennzeichnet,
daß die Teile des Materialflusses über wenigstens zwei Verzweigungen und zwischen Verzweigungen sequentiell geführt werden, daß in den Verzweigungen zwei von wenigstens drei Wegen wahlweise verbunden werden und daß die Verbindung zweier Wege in den Verzweigungen in Abhängigkeit von der Position eines ausgewählten Teiles des Materialflusses innerhalb des von diesem zurückzulegenden Weges hergestellt wird, wobei die Auswahl der Teile in der Weise erfolgt, daß jedem Teil bei der Aufgabe ein Kennzeichen zugewiesen wird, das auf seine Herkunft, Bestimmung od. dgl. hinweist, und daß dieses Kennzeichen synchron mit dem jeweiligen Teil in einer die Verbindung zweier Wege in den Verzweigungen steuernden Steuereinrichtung mitgeführt wird.

2. Verfahren nach Anspruch 1,
dadurch gekennzeichnet,
daß die Bearbeitungs- und/oder Verarbeitungsanlage in Abschnitte unterteilt wird, in welchen das Passieren der einzelnen Teile des Materialflusses registriert wird, und daß in der Steuereinrichtung die Anzahl der einlaufenden Teile mit der Kapazität alternativer nachgeschalteter Bearbeitungs- oder Verarbeitungsstufen verglichen wird.

3. Vorrichtung zur Durchführung des Verfahrens nach Anspruch 1 oder 2 mit einem Rechner und einer Transporteinrichtung

0036851

für die Teile des Materialflusses,

dadurch gekennzeichnet,

daß die Transporteinrichtung zwischen verschiedenen Verarbeitungs- oder Bearbeitungsstufen über Weichen (4, 6, 9) geführt ist, und daß die Weichen über Steuerleitungen mit dem Rechner verbunden sind.

4. Vorrichtung nach Anspruch 3,
dadurch gekennzeichnet,
daß zwischen den Weichen (4, 6, 9) für alle Transporteinrichtungen gemeinsame Bahnen angeordnet sind.

5. Vorrichtung nach Anspruch 3 oder 4,
dadurch gekennzeichnet,
daß an einzelnen Weichen (6) Pufferstrecken (7, 8), insbesondere bis zu einer weiteren Weiche (9) durchgehende Umgehungsstrecken angeschlossen sind.

6. Vorrichtung nach einem der Ansprüche 3, 4 oder 5,
dadurch gekennzeichnet,
daß der Antrieb der Transporteinrichtungen zumindest über Teilbereiche ihrer Bahn reversierbar ist und über Steuerleitungen mit dem Rechner verbunden ist.

0036851

1/1

**Europäisches Patentamt**

**EUROPÄISCHER RECHERCHENBERICHT**

**0036851**
Nummer der Anmeldung

**EP 81 89 0019.3**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE -A1 - 2 406 547 (SCHIERHOLZ KG) <br> * Ansprüche 1, 2 * <br> -- | 1,2,3 |
| | US - A - 2 880 891 (CARROLL) <br> * Ansprüche 1, 2; Fig. 1 * <br> -- | 1,2,4 |
| | DE - B - 1 222 432 (TELEFUNKEN) <br> * Ansprüche 1 bis 3 * <br> -- | 1,3,4 |
| | DE - A - 2 133 615 (KRUG) <br> * Ansprüche 1 bis 3 * <br> -- | 1,2 |
| | DE - B - 1 141 944 (LICENTIA) <br> * Ansprüche 1 bis 4 * <br> -- | 1 |
| | DE - A1 - 2 409 999 ( LICENTIA) <br> * Anspruch 1 * <br> -- | 1 |
| | US - A - 3 316 855 (IMMARIGEON) <br> * Ansprüche 1, 2 * <br> -- | 1 |
| A | US - A - 3 722 426 (BEER) <br> -- | |
| A | DE - A - 2 307 966 (DEMAG) <br> -- | |
| A | DE - A1 - 2 727 097 (BIRFELD et al.) <br> -- | |
| A | US - A - 4 181 947 (KRAUSS et al.) <br> ---- | |

**KLASSIFIKATION DER ANMELDUNG (Int. Cl.³)**

B 65 G  47/50
B 21 B  39/00

**RECHERCHIERTE SACHGEBIETE (Int. Cl.³)**

B 21 B  39/00
B 21 B  41/00
B 65 G  47/00
G 05 B  19/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 02-06-1981 | SCHLAITZ |

EPA form 1503.1  06.78